# EUROPEAN PATENT APPLICATION

(11) **EP 0 722 067 A2**
(43) Date of publication of application: **17.07.1996**
(21) Application number: 96100354.8
(22) Date of filing: 11.01.1996
(51) Int. Cl.: F23G 5/46, F23G 5/30, F23C 11/02

(54) **Heat recovery apparatus by fluidized bed**

(30) Priority: 21.07.1995 JP 185972/95; 21.06.1995 JP 154471/95; 12.01.1995 JP 3576/95
(71) Applicant: KABUSHIKI KAISHA KOBE SEIKO SHO also known as Kobe Steel Ltd., Kobe 651 (JP)
(72) Inventor: Suyari, Mamoru, Kobe Steel, Ltd., Kobe-shi, Hyogo, 651-22 (JP); Ogura, Kenzo, Kobe Steel, Ltd., Kobe-shi, Hyogo, 651 (JP); Ito, Tadashi, Kobe Steel, Ltd., Kobe-shi, Hyogo, 651-22 (JP); Shiraishi, Yukihiro, c/o Kobe Steel, Ltd., Kobe-shi, Hyogo, 651 (JP)
(74) Representative: Tiedtke, Harro, Dipl.-Ing.

(57) **Abstract**

An apparatus having a small construction, which can realize formation of good fluidized bed and good heat recovery, and can stabilize the heat recovery amount and control the same. A first distributing plate (38) and a second distributing plate (40) are provided on the furnace bottom, an incombustible discharge portion (42) is provided between both the distributing plates (38) and (40), and a fluidized bed (12) is formed above the distributing plates (38) and (40). A heat recovering heat transfer pipe (46) and a baffle (54) are provided above the second distributing plate (40), and a plurality of pipe grid type distribotors (50) having a number of fluidized gas jets are juxtaposed above the heat transfer pipes (46). There is formed a reflux such that fluidized particles of the fluidized bed (12) are moved up in the vicinity of the baffle (54) by jetting the fluidized gases from the distributing plates (38) and (40), move down passing through a clearance between the pipe grid type distribotors (50) an a clearance between the heat transfer pipes (46) and return to and above the first distributing plate (38) from the below of the baffle (54).

## Description

### BACKGROUND OF THE INVENTION

### Field of the Invention

The present invention relates to an apparatus in which industrial wastes, city refuse, coals and the like are burned by fluidized beds to recover heat generated therefrom.

### Description of the Related Art

A heat recovery apparatus having a fluidized bed comprising sand particles formed on an air distributing plate has been heretofore often used as an apparatus for recovering heat generated by burning industrial wastes. In this apparatus, the particles are very well mixed in the fluidized bed, and an in-bed temperature can be maintained uniformly. Further, there is an advantage that the restart can be easily made since the heat retaining capacity of the particle bed is high.

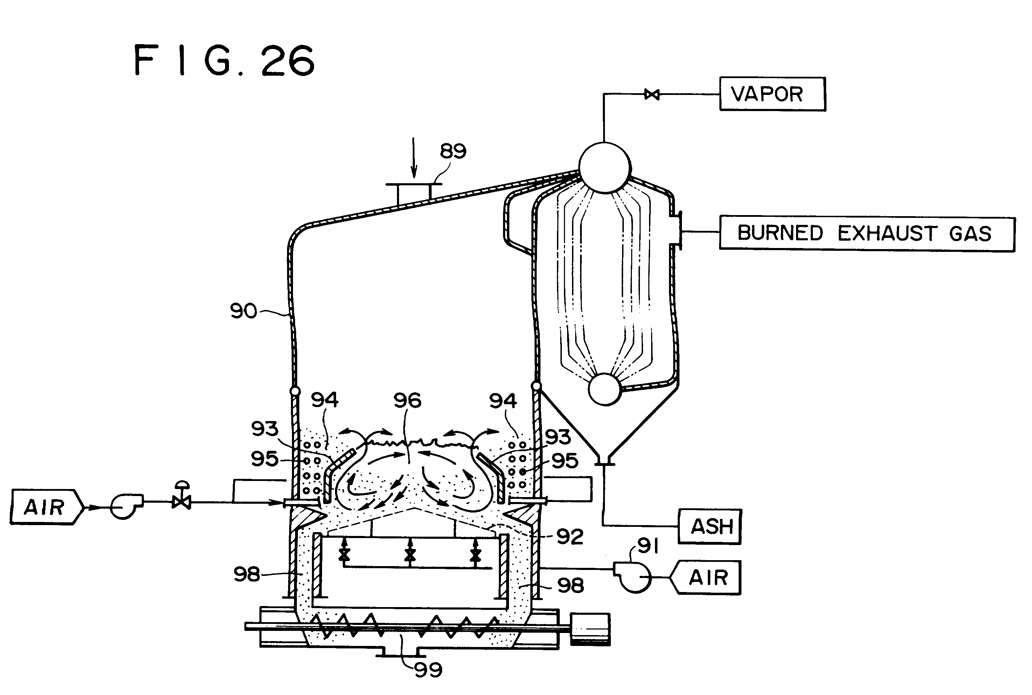

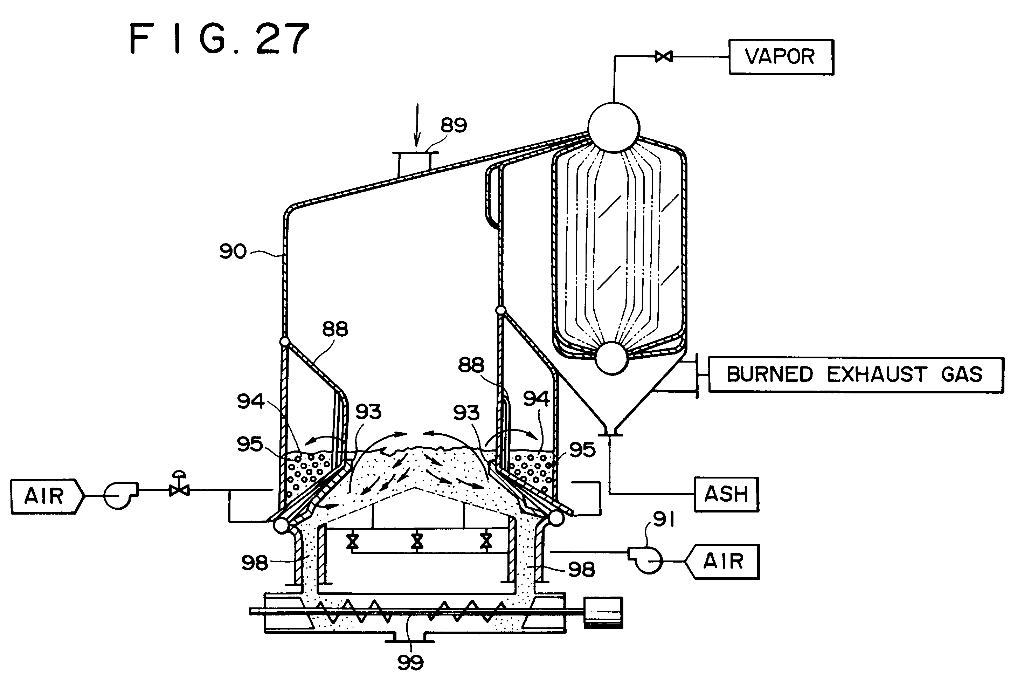

For example, Japanese Patent Application Laid-Open No. 63-187001 Publication discloses such an apparatus as described above, as shown in Figs. 26 and 27.

In the apparatus shown in Fig. 26, a crown-shaped air distributing plate 92 is provided on the bottom of a furnace 90. Discharged air or fluidized gases from a blower 91 are emitted upward from the air distributing plate 92 to thereby form a fluidized bed comprising sand particles. More specifically, a gas emitting speed in both left and right wings of the distributing plate 92 is set to be higher than that in the central portion thereof, and a reflecting partition 93 in a shape opposite to the emitting direction of the fluidized gases is provided upwardly of the air distributing plate 92 so that the sand particles are violently blown up by the left and right wings, are subsequently reflected by the reflecting partition 93 and are precipitated, in which manner a fluidized bed is formed.

In such a fluidized bed, when substances to be burned such as city refuse are thrown into a central main combustion chamber 96 from an upper inlet 89, the substances to be burned are burned while flowing together with the sand particles within the fluidized bed whereas incombustibles are conveyed outside the apparatus by a screw conveyor 99 via an incombustible outlet 98. Further, a part of the sand particles is moved into an external heat recovery chamber 94 beyond the reflecting partition 93 and is precipitated in the heat recovery chamber 94. A heat transfer pipe 95 is disposed within the heat recovery chamber 94. The sand particles moved into the heat recovery chamber 94 are recovered by the heat transfer pipe 95.

On the other hand, in the apparatus shown in Fig. 27, a water pipe 88 is formed on the side of the heat recovery chamber 94, and a protector is provided on the water pipe 88 at the upper part of the reflection partitioning wall.

The above-described apparatus has the following problems that should be solved.
A) Since the interior of the apparatus is horizontally and completely partitioned into the main combustion chamber 96 and the heat recovery chamber 94, an installation area for the entire apparatus is increased by an additional space for the heat recovery chamber 94, making miniaturization of the entire apparatus difficult.
B) In the above-described apparatus, since the sand particles blown up by the fluidizing gases are applied to the reflecting partition 93 for reflection thereof to effect the reflux of the sand particles, the reflecting partition 93 becomes severely worn and damaged, thus shortening the service life accordingly.
C) In the apparatus shown in Fig. 27, since the water pipe 88 is disposed on the surface of the bed which is subjected to the severe flow, the water pipe 88 becomes materially worn and the service life is also short. As means to avoid such inconveniences, it is contemplated that a protector shown, for example, in Japanese Patent Publication No. 5-87758, be provided. However, this protector comprises exactly an expendable, and the replacing work therefor is cumbersome.
D) In the apparatus shown in Fig. 26, large solids as well as the incombustibles into which a sand bed is mixed are possibly moved into the heat recovery chamber 94 and clogged between the heat transfer pipes 95. Such a clogging greatly impairs good formation of a fluidized bed and smooth heat recovery.
E) It is preferable for stabilizing the heat recovery by way of the heat transfer pipe 95 to make the amount of sand into the heat recovery chamber 94 even and further control it. However, it is extremely difficult, in the above-described apparatus, to make the amount of sand even or control it.

### SUMMARY OF THE INVENTION

It is an object of the present invention to provide a heat recovery apparatus by a fluidized bed capable of solving the problems as noted above.

According to a preferred mode of the present invention, there is provided a heat recovery apparatus by a fluidized bed having an air distributor on the bottom of the apparatus body, said air distributor having a fluidized bed comprising fluidizing particles and a heat transfer pipe into which flows a medium for recovering heat generated by burning substances to be burned in said fluidized bed provided thereon characterized in that said heat transfer pipe is disposed at a position adjacent to a side wall of said apparatus body, a baffle is provided at a position away from the side wall of said apparatus body and at a position upwardly away from said air distributor, a plurality of pipe grid type gas distributors having a number of fluidized gas emitting ports provided in the pipe wall are substantially horizontally juxtaposed upwardly of said heat transfer pipe, and the fluidizing gases are emitted from said air distributor to thereby form in the fluidized bed a reflux in which said fluidizing particles move up along the neighborhood of the surface opposite to the surface opposed to said heat transfer pipe in said baffle, and move down passing through between said pipe grid type gas distributors and a location where said heat transfer pipe is disposed to creep under said baffle.

According to the above-described preferred mode, the substances to be burned are thrown into the main combustion portion on the side opposite to that is present the heat transfer pipe with the baffle being a boundary whereby the combustibles in the substances to be burned burn. The particles constituting the fluidized bed of the main combustion portion are moved upwardly of the pipe grid type gas distributors by the action of the fluidized gases and precipitated from between the pipe grid type gas distributors toward the heat transfer pipe. The heat of the fluidized bed is recovered by the heat transfer pipe, and the particles constituting fluidized bed is returned to its original position creeping under the baffle.

In the above-described apparatuses, the main combustion portion includes not only the portion opposite to the portion where the heat transfer pipe is disposed with the baffle being a boundary but also a space above the pipe grid type gas distributors. From a viewpoint of this, the heat transfer pipe sinks in a position lower than the surface of the fluidized bed and becomes less worn than the case where it is disposed on the surface of the fluidized bed. Further, since the fluidized bed is formed by the fluidized gases emitted from the air distributor on the bottom of the apparatus body, it is not necessary to directly beat the fluidized bed against the reflecting plate or the like as in prior art, and the baffle, the pipe grid type gas distributors and the like become less worn.

Further, since the pipe grid type gas distributors act as the fluidizing resistance to the fluidized bed, the amount of the fluidized particles into the heat recovery portion (that is, the portion where the heat transfer pipe is provided) is stabilized as compared with the case where no pipe grid type gas distributor is present. In addition, the aforesaid flowing amount can be controlled by adjusting the amount of gases emitted out of the pipe grid type gas distributors. Further, the pipe grid type gas distributor fulfil the duties of a sieve which impedes the entry of large solids, and can impede such an entry as described with high probability by floating the solids over the pipe grid type gas distributors by way of gases emitted out of the pipe grid type gas distributors.

### BRIEF DESCRIPTION OF THE DRAWINGS

The aforesaid and other objects and features of the present invention will become more apparent from the following detailed description and the accompanying drawings.

Fig. 1 is a front view in section showing essential parts of a heat recovery apparatus by a fluidized bed according to a first embodiment.

Fig. 2 is a plan view in partly section showing the aforementioned essential parts.

Fig. 3 is an entire structural view of the heat recovery apparatus by a fluidized bed.

Fig. 4 is a front view in section showing essential parts of a heat recovery apparatus by a fluidized bed according to a second embodiment.

Fig. 5 is a plan view in partly section showing the aforementioned essential parts.

Fig. 6 is a front view in section showing essential parts of a heat recovery apparatus by a fluidized bed according to a third embodiment.

Fig. 7 is a plan view in partly section showing the aforementioned essential parts.

Fig. 8 is a front view in section showing essential parts of a heat recovery apparatus by a fluidized bed according to a fourth embodiment.

Fig. 9 is a plan view in partly section showing the aforementioned essential parts.

Fig. 10 is a front view in section showing a modification of said essential parts.

Fig. 11 is a front view in section showing essential parts of a heat recovery apparatus by a fluidized bed according to a fifth embodiment.

Fig. 12 is a front view in section showing essential parts of a heat recovery apparatus by a fluidized bed according to a sixth embodiment.

Fig. 13 is a front view in section showing essential parts of a heat recovery apparatus by a fluidized bed according to a seventh embodiment.

Fig. 14 is a plan view in section showing essential parts of the heat recovery apparatus by a fluidized bed.

Fig. 15 is a front view in section showing essential parts of a heat recovery apparatus by a fluidized bed according to an eighth embodiment.

Fig. 16 is an entire structural view of the heat recovery apparatus by a fluidized bed in a preferred embodiment improved over the first embodiment of the present invention.

Fig. 17 is a front view in section showing essential parts of the heat recovery apparatus by a fluidized bed.

Fig. 18 is a graph showing a relationship between the heat release value of wastes and the rate of increase in amount of heat recovery due to recirculation of exhaust gases.

Fig. 19 is a graph showing a relationship between the rate of recirculation of exhaust gases and the rate of reduction in NOx.

Fig. 20 is an entire structural view of the heat recovery apparatus by a fluidized bed in another embodiment of the present invention.

Fig. 21 is a front view in section showing essential parts of the heat recovery apparatus by a fluidized bed in another embodiment improved over the first embodiment of the present invention.

Fig. 22 is a front view in section showing essential parts of the heat recovery apparatus by a fluidized bed in still another embodiment of the present invention.

Fig. 23 is a sectional view taken on line A-A of Fig. 22.

Fig, 24 is a graph showing a relationship between the low heat release value of wastes and the combustion rate in the sand bed in the case where oxygen is added and in the case where oxygen is not added in the above-described embodiments.

Fig. 25 is a graph showing a relationship between the combustion rate in the sand bed and the heat recovery amount of the sand bed.

Fig. 26 is a front view in section showing one example of the conventional heat recovery apparatus by a fluidized bed.

Fig. 27 is a front view in section showing one example of the conventional heat recovery apparatus by a fluidized bed.

### DESCRIPTION OF THE PREFERRED EMBODIMENTS

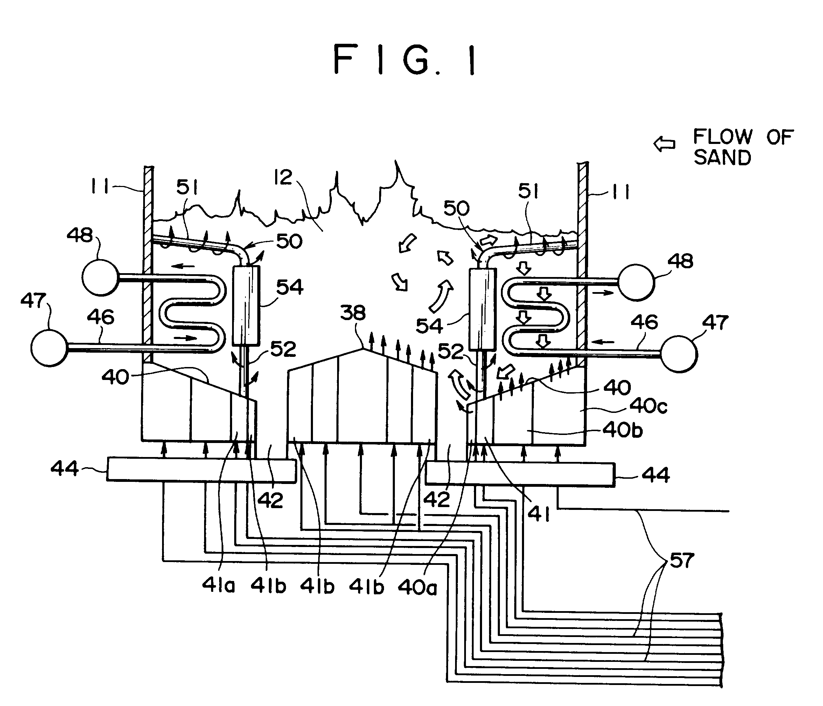

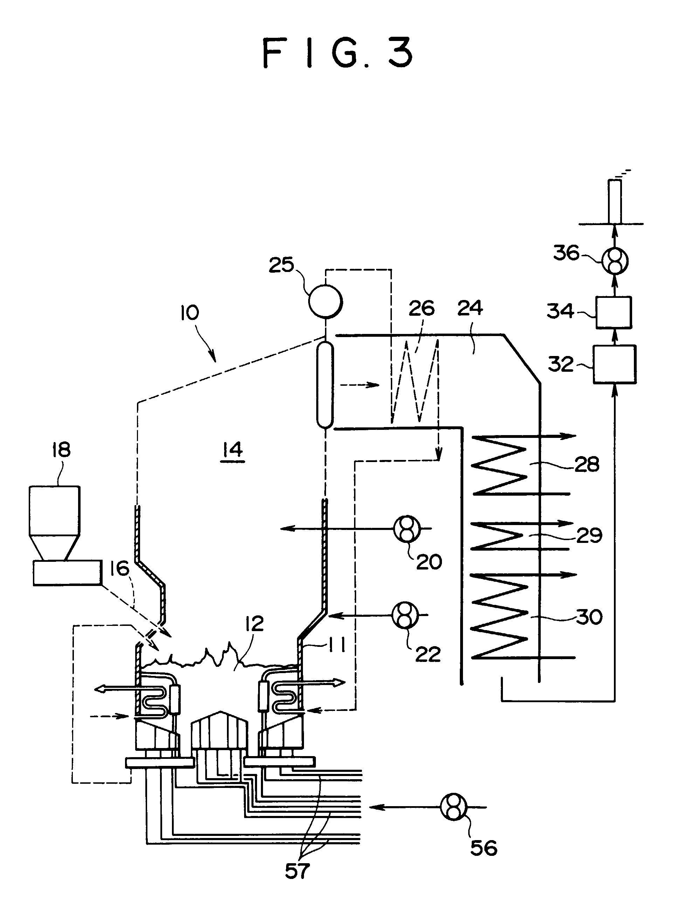

A first embodiment of the present invention will be described with reference to Figs. 1 to 3.

The heat recovery apparatus by a fluidized bed is provided with an incinerator 10 surrounded by a heat insulating wall 11. The incinerator 10 is formed at the bottom thereof with a fluidized bed 12 formed from sands or the like, an upper portion of which serves as a free board 14. An inlet 16 for substances to be burned is formed in an intermediate portion of the incinerator, and a feeder 16 for substances to be burned is connected to the inlet 16. A secondary air blower 20 is connected at a suitable level of the intermediate portion of the incinerator, and a duct 24 is connected to the upper part of the incinerator.

The heat insulating wall 11 at the free board 14 is of a membrane construction in which the inner surface thereof to a certain height is covered with refractories so that heat is absorbed from a gas layer through the wall surface. Vapors evaporated at the membrane are gathered in a vapor reservoir 25, and the vapor recovers heat of exhaust gases by a superheater 26 and is fed to an inlet header 47 of a heat transfer pipe 46 described later. Heat of the exhaust gases is carried away by the superheater 26, after which the heat is further carried away by an evaporator 28 of the construction similar to that of the membrane of the furnace wall, a water heater 29 for avoiding a low temperature corrosion, and an air heater 30 for combustion air. Then, the exhaust gases are cooled by a gas cooler 32, and thereafter dusts are removed by a bag filter 34. The gases are then discharged out of a smoke stack passing through an exhaust fan 36.

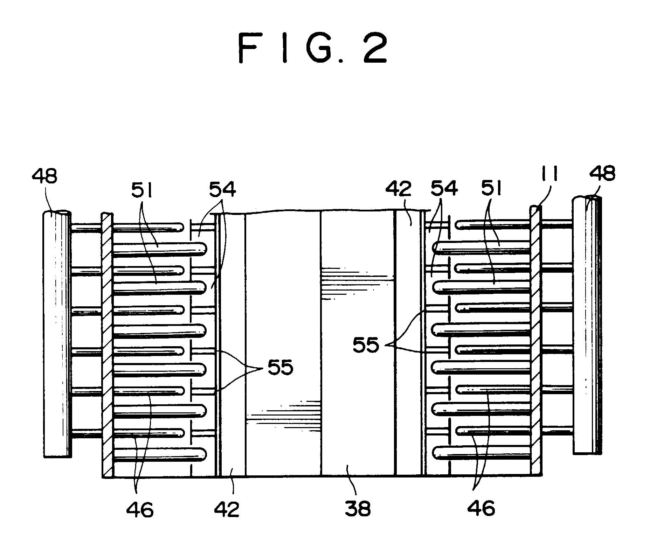

The construction of the bottom of the incinerator 10 will be described with reference to Figs. 1 and 2.

A first distributing plate 38 is disposed in the center in a lateral direction of the furnace bottom, and second distributing plates 40 are disposed on both left and right sides, both the second distributing plates 40 being adjacent to the heat insulating wall (the side wall of the apparatus body) 11. The first distributing plate 38 is horizontally parted from the second distributing plates 40, which portion comprises an incombustible discharge portion 42. An incombustible extraction device 44 is provided under the incombustible discharge portion 42. The incombustible extraction device 44 houses therein a screw conveyor for conveying incombustibles-contained sands derived from the incombustible discharge portion 42 to both left and right outsides.

The first distributing plate 38 is inclined in the form of a crown so that the former lowers toward both the left and right incombustible discharge portion 42, and the second distributing plates 40 are also inclined in a direction of being lowered toward the incombustible discharge portion 42. These angles of inclination may be suitably set but are preferably more than 15° but less than 35°.

Above both the second distributing plates 40, a plurality of heat transfer pipes 46 are equally distantly juxtaposed in a direction of depth in Fig. 1 (a vertical direction in Fig. 2). Each of the heat transfer pipes 46 extends through the lower part of the heat insulating wall 11 sideways into the furnace, meanders on the second distributing plate 40, extends through the heat insulating wall 11 above the first-mentioned extending-through portion and extends outside the furnace. Both ends of the heat transfer pipe are connected to an inlet header 47 and an outlet header 48 extending in a direction of depth in Fig. 1. The vapor fed from the superheater 26 to the inlet header 47 flows into the heat transfer pipes 46 as a heat recovery medium and is recovered by the outlet header 48.

Pipe grid type distributors 50 for defining the fluidized bed 12 into a main combustion portion and a heat recovery portion are disposed within the furnace. Each pipe grid type distributor 50 comprises an upper portion 51 positioned above the heat transfer pipe 46 and an upright portion 52 which substantially vertically extends passing the sideways of the heat transfer pipe 46 from the upper portion 51 to the second distributing plate 40. A number of gas jet holes are bored in the wall of the upper portion 51 and in the vicinity thereof.

The upper portion 51 is inclined in a direction to be lowered toward the incombustible discharge portion 42, and the upper surface of the fluidized bed 12 is positioned slightly above the upper portion 51. The angle of inclination can be freely set, preferably, more than 5° but less than 35°.

Baffles 54 formed from a refractory, a jacket or the like are disposed in the periphery of the middle portion of the upright portion 52. A clearance 55 is secured between the baffles 54, and a small amount of sand particles can be passed through the clearance 55.

The spacing between the pipe grid type distributors 50 disposed is set equal to that of the heat transfer pipes 46. Here, the spacing between the pipe grid type distributors 50 is smaller than that of the heat transfer pipes 46 by a portion that the diameter of the pipe grid type distributor 50 is larger than that of the heat transfer pipe 46. Further, the spacing between the pipe grid type distributors 50 is smaller than the vertical spacing (i.e., the outlet width of the heat recovery portion) between the baffle 54 and the second distributing plate 40.

The distributing plates 38 and 40 are bored with a number of fluidized gas jets. A plurality of gas chambers 41b and a plurality of gas chambers 40a, 41, 40b, and 40c are juxtaposed below the first distributing plate 38 and laterally below the second distributing plate 40, respectively. A primary air blower (gas jetting means) which is a source for feeding fluidized gas (here, air) is connected to each of said gas chambers through a pipe 57 so that the fluidized gas discharged from the primary air blower 56 is jetted from the fluidized gas jet toward the fluidized bed 12 in the furnace.

The fluidized.gas is supplied into the pipe grid type distributor 50 from the specific gas chamber near the incombustible discharge portion which is the gas chamber below the second distributing plate 40 out of the aforementioned gas chambers. The fluidized gas jetted through the fluidized gas jet from the gas chamber 40a nearer to the incombustible discharge portion 42 than the gas chamber 41 is jetted in a horizontal direction toward the incombustible discharge portion 42 to pass by the surface directed at the first distributing plate 38 in the baffle 54.

Further, a damper in a circuit for controlling the amount of the fluidized gas flowing through each of the pipes 57 is provided halfway of the pipe connected to each of the gas chambers. This damper can be used to control the amount of the fluidized gas jetted for each pipe 57.

In this embodiment, basically, the amount of the fluidized gas jetted out of the gas chamber 41b in the vicinity of the incombustible discharge portion 42 out of all the gas chambers is set relatively large, and the amount of the fluidized gas jetted out of the gas chamber 41 positioned in the crown-shaped central portion of the first distributing plate 38 and in the portion below the heat transfer pipe 46 in the second distributing plate 40 is set relatively small. To set the amount of jet as described, there is formed a flow, as shown by the whitened arrows in Fig. 1, in which the sand particles on the side of the main combustion portion move up passing the neighborhood of the side of the baffle 54 and overflow and precipitate toward the central side of the furnace and the upper portion 51 side of the pipe grid type distributor 50.

The operation of the apparatus will be described hereinafter.

First, the wastes (substances to be burned) such as city refuses thrown through the combustible inlet 16 fall into the fluidized bed 12 (into the main combustion on the first distributing plate 38 and are burned. In the fluidized bed 12, the sand particles which move up passing by the baffle 54 overflow and precipitate toward the central portion of the furnace and the upper portion 51 side of the pipe grid type distributor 50.

More specifically, the particles overflown toward the upper portion 51 pass through the clearance between the upper portions 51 and precipitate between the heat transfer pipes 46 within the heat recovery portion sandwiched between the baffle 54 and the heat insulating wall 11 to impart the burned heat to the heat transfer pipes 46, and after this (i.e., after the burned heat has been recovered by the heat transfer pipes 46), the particles slip down toward the incombustible discharge portion 42 along the inclined surface of the second distributing plate 40. Further, the particles overflown toward the central portion of the furnace precipitate into the crown-shaped central portion of the first distributing plate. 38 and slip down toward the incombustible discharge portion 42 along the inclined surface of the first distributing plate 38. Since the strong fluidized gases are jetted out of the gas chamber 41b immediately before the incombustible discharge portion 42, a part of the sand particles is forced up by the fluidized gas and recirculated to the main combustion portion while other sand particles fall into the incombustible discharge portion 42 together with the incombustibles (solids) and are delivered out both left and right sides by the incombustible extraction device 44. The thus delivered particles are sieved, and only the fine sand particles are again supplied to the fluidized bed 12.

The effects obtained by the heat recovery apparatus described above are as follows.
(a) Unlike the conventional apparatus shown in Figs. 26 and 27, since the not only the space above the first distributing plate 38 but also the space above the pipe grid type distributor 50 on the second distributing plate 40 can be utilized as the main combustion portion, the installation area for the apparatus is reduced. In addition, since the space above the heat transfer pipe 48 can be also effectively utilized, the heat transfer pipe 46 can be sunk at a position lower than the surface of the fluidized bed 12 where a violent flow occurs. It is possible to suppress the wear as compared with the case where the heat transfer pipes are disposed on the surface of the fluidized bed 12 as in the conventional apparatus shown in Fig. 26.
(b) Since the fluidized bed is not directly hit against the reflecting plate or the like to form reflux as in prior art but the fluidized bed is formed by the fluidized gases jetted from the top of the distributing plates 38 and 40, the baffle 54 and the -pipe grid type distributor 50 become less worn.
(c) Since the pipe grid type distributor 50 comprises a fluid resistance of the fluidized bed 12, the amount of the fluidized particles flowing into the heat recovery portion is stabilized as compared with the cases where the pipe grid type distributor 50 is not present, and the flowing amount can be controlled by adjusting the amount of gases jetted out of the pipe grid type distributor. Further, by adjusting the amount of gases jetted, particularly, adjusting the amount of fluidized gases jetted out of the substantially lower position of the baffle 54 on the second distributing plate 40, it is possible to effectively control the amount of reflux of the fluidized particles passing through the heat recovery portion.
(d) The pipe grid type distributor 50 fulfils the duties of a sieve for impairing an entry of large solids, and the solids are placed in a floating state on the pipe grid type distributor by the gases jetted out of the pipe grid type distributor 50, thus preventing such an entry with high probability. Particularly, in this embodiment, since the upper portion 51 of the pipe grid type distributor 50 is inclined in a direction to be lowered as it parts from the heat insulating wall 11, even if large solids are carried above the upper portion 51, the solids are positively fallen toward the main combustion portion along the pipe grid type distributor, thus preventing the entry thereof into the heat recovery portion with high probability. Moreover, since the clearance between the pipe grid type distributors 50 is smaller than the clearance between the heat transfer pipes 46 and the vertical clearance between the baffle 54 and the second distributing plate 40 (i.e., the outlet width of the heat recovery portion), the solids which are larger than the spacing between the heat transfer pipes 46 and the outlet width of the heat recovery portion cannot pass through between the pipe grid type distributors 50, thus preventing the clogging of the solids at the aforesaid portion more positively.
(e) The sideward entry of the solids from the main combustion portion into the heat recovery portion can be prevented by the presence of the baffle 54.
(f) Since the first distributing plate 38 and the second distributing plate 40 are inclined in a direction to be lowered toward the incombustible discharge portion 42. the solids sunk on the distributing plates 38 and 40 can be positively slipped onto the incombustible discharge portion 42, without being accumulated, and can be always discharged.
(g) Flowing and burning air is supplied from the upper side 51 of the pipe grid type distriutor 51, the air supplied to the pipe grid type distriutor 50 can cool and protect the pipe grid type distriutor 50 and the baffle 54 disposed halfway of the pipe grid type distriutor 50.

While in the above-described embodiment, the pipe grid type distriutor 50 extends to the heat insulating wall 11 which is the side wall of the furnace, it can be configured such that the pipe grid type distriutor 50 extends through the heat insulating wall 11, and the thus extended-through pipe grid type distriutor is connected to the secondary air supply pipe. With this configuration, a part of air supplied to the pipe grid type distriutor 50 is supplied into the furnace as flowing and burning air whereas the remainder is supplied to the free board portion as the secondary air. The air having passed through the pipe grid type distriutor 50 becomes high temperature air when the latter passes through the pipe grid type distriutor 50. Therefore, the combustion efficiency can be improved as compared with the case where normal normal-temperature air is used as the secondary air. Further, in the case of the above configuration, the amount of air supplied to the pipe grid type distriutor 50 can be increased to sufficiently cool the pipe grid type distriutor 50 and the baffle 54. And the sufficient protective effect can be obtained.

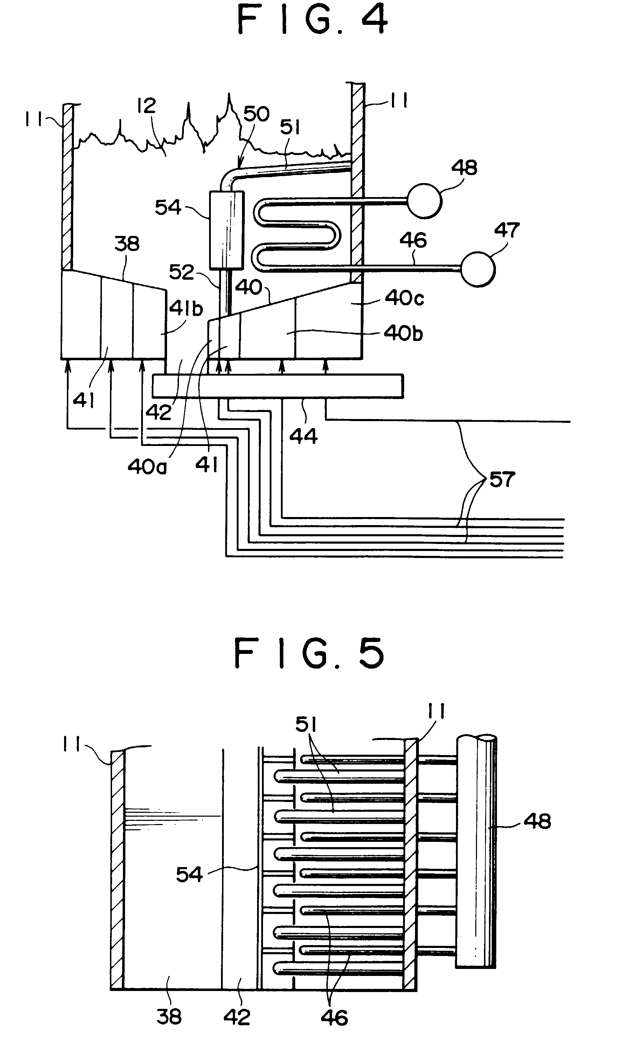

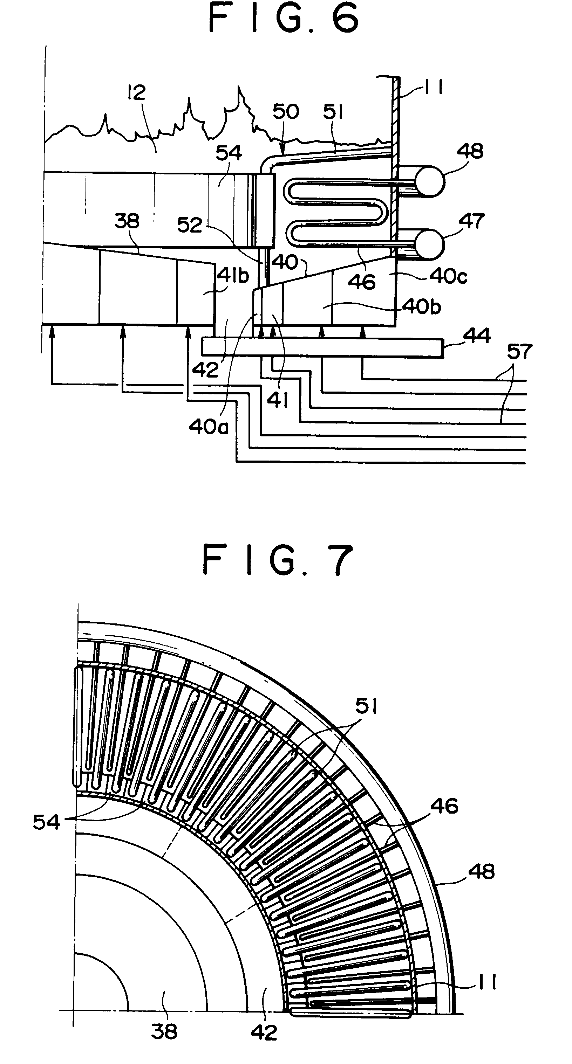

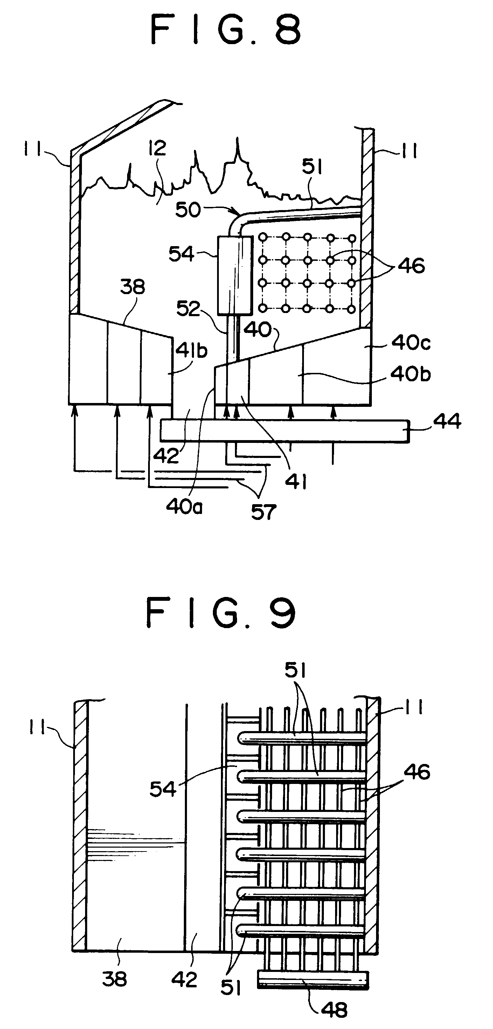

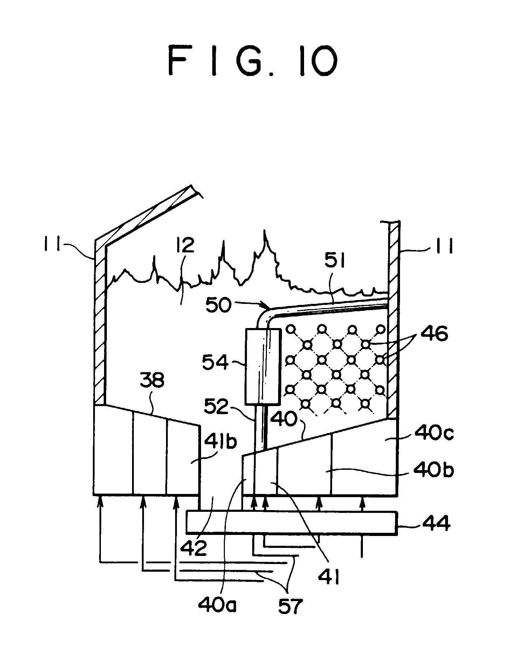

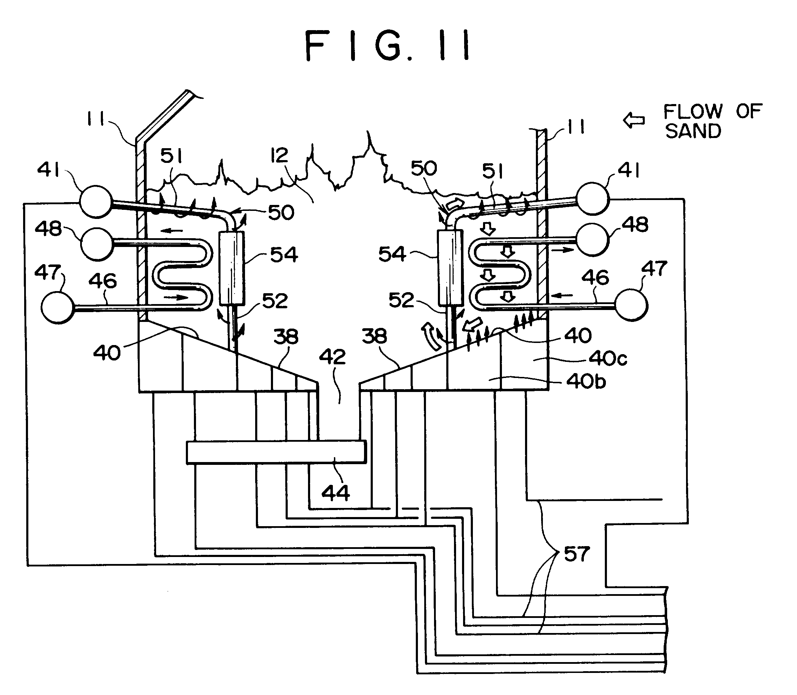

The present invention is not limited to the above-described embodiment but the following modes can be employed as an example.
(1) While in the above-described embodiment, the first distributing plate 38 is disposed in the central portion of the furnace and the second distributing plates 40 are disposed on both outer sides, it is to be noted in the second embodiment that as shown in Figs. 4 and 5, the first distributing plate 38, the second distributing plate 40 and the incombustible discharge portion 42 may be disposed on one side of the furnace, on the other side of the furnace and in the substantially central portion, respectively, of the furnace. Further, while in the first embodiment, the first distributing plate 38 and the second distributing plate 40 are linearly extended in a direction of depth in Fig. 1, and the heat transfer pipes 46 and the pipe grid type distributors 50 are juxtaposed in the same direction, it is to be noted in the third embodiment that as shown in Figs. 6 and 7, the shape of the furnace may be made to be cylindrical, the conical first distributing plate 38 be disposed in the central portion, the dough-nut shaped second distributing plate 40 be disposed externally in a diametral direction, and the incombustible discharge portion 42 be formed over the whole periphery between both the distributing plates 38 and 40, respectively. In this case, the heat transfer pipes 46 and the pipe grid type distributor 50 may be also juxtaposed the peripheral direction.
(2) While in the above-described embodiment, the inlet header 47 and the outlet header 48 are disposed on both left and right outer sides of the furnace and both ends of the heat transfer pipe 46 are made to extend through the heat insulating wall (side wall) 11, it is to be noted in the fourth embodiment that as shown in Figs. 8 and 9, the heat transfer pipes 46 are passed linearly parallel with the heat insulating wall 11, one end of which is connected to the inlet header (not shown) whereas the other end being connected to the outlet header 48. In this case, the arranging direction of the heat transfer pipes 46 may be of longitudinal and lateral as shown in Fig. 8 or may be of oblique as shown in Fig. 10.
(3) As the baffle in the present invention, a baffle entirety of which is integrally formed may be provided separately from the pipe grid type distributor 50. In this case, a stanchion separately from the pipe grid type distributor 50 is stood upright on the second distributing plate 40 and the aforesaid integrally formed baffle may be supported by this stanchion. In this case, however, the construction becomes so large-scaled that the installation is not easy, and further a high thermal stress possibly occurs. On the other hand, as described in the above-described embodiment, the pipe grid type distributor 50 is extended substantially vertically sideward of the heat transfer pipe 46 up to the second distributing plate 40 and the baffle 54 formed from the refractory, the jacket or the like is formed in the periphery of each of the pipe grid type distributors. This brings forth the advantages in that the apparatus can be easily fabricated as compared with the former, and since the baffle 54 can be divided per the pipe grid type distributor 50 to prevent an occurrence of a high thermal stress. Further, since the fine clearance 54 can be secured between the baffles 54, a flow of the sand particles from the heat recovery portion to the main combustion part through the fine clearance 55 can be produced. This flow can be utilized to prevent an entry of a small amount of the fluidized gas into the heat recovery chamber from the outlet of the heat recovery chamber, There is another advantage in that a local wear of the heat transfer pipe caused by the gas can be suppressed. Further, alternatively, the interior of the baffle 54 is formed into a space to form the gas chamber 41 so that the fluidized gas may be supplied from the gas chamber 41 to the distributing chamber 50 via the top 51 of the pipe grid type distributor. In this case, a pipe for supplying the fluidized gas to the baffle 5 corresponds to the upright portion 52 of the pipe grid type distributor. There is a further advantage in that a less number of the pipes will suffice, and the width of the discharge passage for incombustibles from the heat recovery chamber is enlarged to make the discharge of incombustibles easy.
(4) While in the above-described embodiment, the incombustible discharge portion 42 is provided at a boundary position between both the distributing plates 38 and 40, it is to be noted in the fifth embodiment that as shown in Fig. 11, the incombustible discharge portion 42 may be provided in the central portion of the furnace and the first distributing plate 38 can be made continuous to the second distributing plate 40 to enable the heat recovery. In this case, if in the first distributing plate 38, nearer the incombustible discharge portion 42, the amount of gas jetted therefrom increases. Then, the good reflux of the fluidized bed 12 can be formed on both the distributing plates 38 and 40, similarly to the above-described first embodiment.

However, in the arrangement of this embodiment, if the distributing plates 38 and 40 are inclined toward the incombustible discharge portion 42, the inclining directions of both the distributing plates 38 and 40 are the same and the dimension of the maximum depth of the fluidized bed 12 at the bottom of the apparatus becomes very large for only the inclined portion. On the other hand, if the first distributing plate 38 and the second distributing plate 40 are disposed on both sides of the incombustible discharge portion 42 (that is, if the incombustible discharge portion 42 is provided at a position substantially below the baffle 54), the first distributing plate 38 and the second distributing plate 40 can be inclined in the direction different from each other, and the depth of the fluidized bed can be averaged to reduce the maximum depth. This brings forth an advantage in that pressure necessary for supplying the fluidized gas can be reduced to save consumption power.

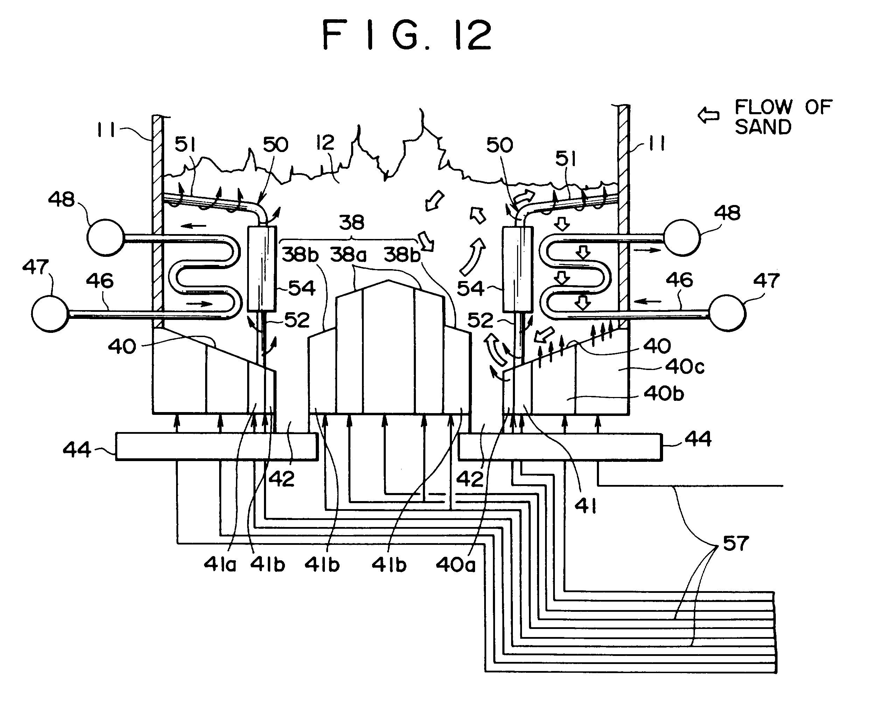

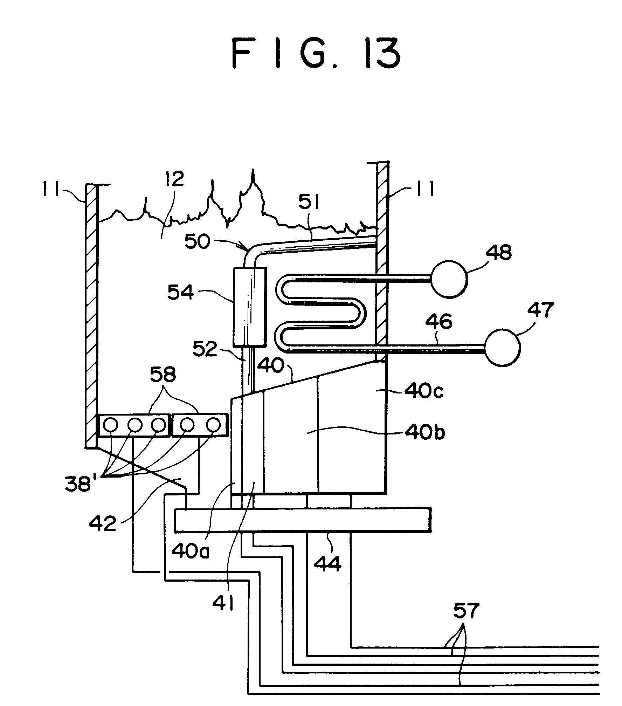

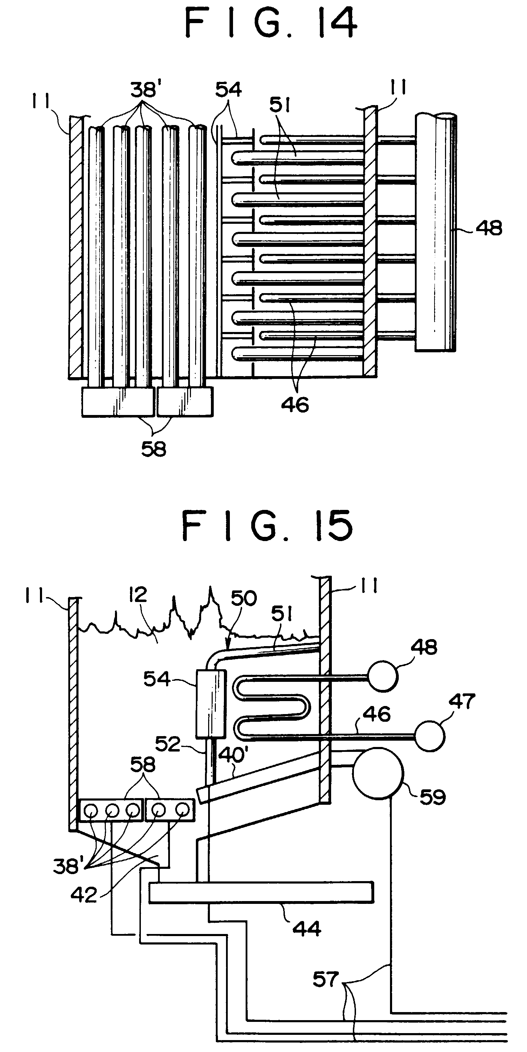

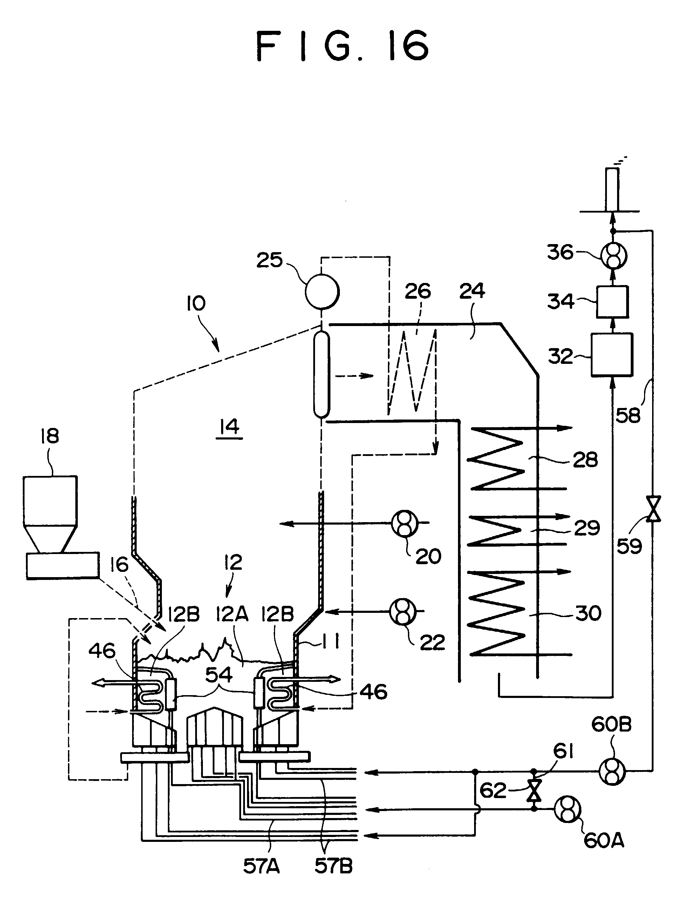

Alternatively, each of the distributing plates need not be plane but in the sixth embodiment, the central portion 38a of the crown-shaped first distributing plate 38 shown in the above-described first embodiment is made higher than the both sides 38b so as to form a shoulder, as shown in Fig. 12.
(5) While in the above-described embodiments, the distributor for jetting the fluidized gas from the furnace bottom is composed of the distributing plates 38 and 40 and the means for jetting gases from these distributing plates 38 and 40, it is to be noted that in the seventh embodiment, a pipe grid type distriutor 38' as shown in Figs. 13 and 14 may be disposed in place of the above-described distributing plate 38. In this embodiment, a plurality of the pipe grid type distriutor 38' are horizontally disposed in a state parallel with each other, a plurality of gas jets are formed in an upper half of each pipe grid type distriutor 38', and one end of each pipe grid type distriutor 38' is connected to a common inlet header 58. In this apparatus, the fluidized gas is supplied from each inlet header 58 into each pipe grid type distriutor 38' to jet it upward from each gas jet of each pipe grid type distriutor 38' thereby enabling formation of the fluidized bed 12. In this case, since the incombustibles fall from a clearance between the pipe grid type distriutors 38', a portion below these pipe grid type distriutors 38' comprises the incombustible discharge portion 42. Further, in the eighth embodiment, a pipe grid type distriutor 40' may be provided in place of the second distributing plate 40, as shown in Fig. 15.
(6) In the present invention, both the heat transfer pipe 46 and the pipe grid type distriutor 50 may have the same diameter or the heat transfer pipe 46 may have the larger diameter than that of the pipe grid type distriutor 50 In any case, the clearance between the pipe grid type distriutors 50 can be set to be smaller than that between the heat transfer pipes 46 to thereby positively prevent the large solids from being clogged between the heat transfer pipes 46. Next, preferred embodiments improved over the first embodiment will be described with reference to Figs. 16 to 20.

In the heat recovery apparatus by a fluidized bed, to fluidize the fluidized bed in the heat recovery portion, it is effective to provide means for supplying the. fluidized gas to the heat recovery portion with sufficient flow rate (generally, the flow rate at which the speed of one to twice of the necessary minimum fluidizing speed is obtained). It is generally contemplated that the fluidized gas comprises primary air for combustion flows at a normal temperature.

However, in the case where the fluidizing air is supplied to the heat recovery portion, there occurs the following inconveniences.
a) In the above-described apparatus, in the case where the in-bed combustion rate such as the case where calorie of fuel charged is high, it is feared that all the quantities of heat required are difficult to be recovered unless the heat recovery rate from the sand bed is enhanced. However, when the in-bed heat recovery rate is excessively enhanced, the temperature in the sand bed lowers failing to maintain the stabilized combustion. Therefore, there is a limit in enhancing the in-bed heat recovery rate.
   As the means for enhancing the heat recovery rate,. there is contemplated a method for making use of heat energy of the burned exhaust gases to preheat the fluidizing air supplied into the heat recovery portion. In this case, however, the combustion within the heat recovery portion is promoted by a rising portion of temperature for the fluidizing air. When the combustion within the heat recovery portion is promoted in a manner as described, the thermal or chemical deterioration and damage of the heat transfer pipes within the heat recovery portion are possibly promoted due to the phenomenon of a local higher temperature and the generation of hydrogen chloride resulting from the combustion.
b) In the above-described apparatus, the wastes which are fuel are charged into the main combustion portion but this fuel sometimes enters the heat recovery portion. At this time, when a considerable amount of air is supplied into the heat recovery portion, the combustion of the fuel within the heat recovery portion is promoted by oxygen contained in the air to possibly bring forth the phenomenon of a local higher temperature and the generation of hydrogen chloride as mentioned above.
c) In the heat recovery portion, the combustion does not take place in principle. Accordingly, air supplied to the heat recovery portion for fluidization is surplus air not contributed to combustion. The more the surplus air, the concentration of NOx in the burned exhaust gases becomes high, possibly adversely affecting on the environment.

The present embodiment has its object to increase the amount of heat recovery in the sand bed without any inconvenience while satisfactorily fluidizing the fluidized bed in the heat recovery portion, to suppress the combustion in the heat recovery portion to protect the heat transfer pipes, and to suppress the concentration of oxygen in the heat recovery portion to reduce the amount of generation of NOx.

As the means for solving the aforementioned problem, the present embodiment provides a heat recovery apparatus by a fluidized bed comprising a distributor for main combustion portion in which a fluidized bed formed of fluidized particles at the bottom of the apparatus body is divided into a main combustion portion and a heat recovery portion by a baffle, heat transfer pipes for recovering heat within the heat recovery portion, and fluidized gases for fluidizing the fluidized particles in the main combustion portion are jetted to the main combustion portion, and a distributor for heat recovery portion for jetting fluidized gases for fluidizing the fluidized particles in the heat recovery portion to the heat recovery portion, whereby the fluidized particles in the main combustion portion are moved into the heat recovery portion by the fluidized gases passing above the baffle and further pass below the baffle to form a flow which returns into the main combustion portion, wherein burned exhaust gases generated by the combustion in the fluidized bed are recirculated to the distributor for heat recovery portion as the fluidized gases.

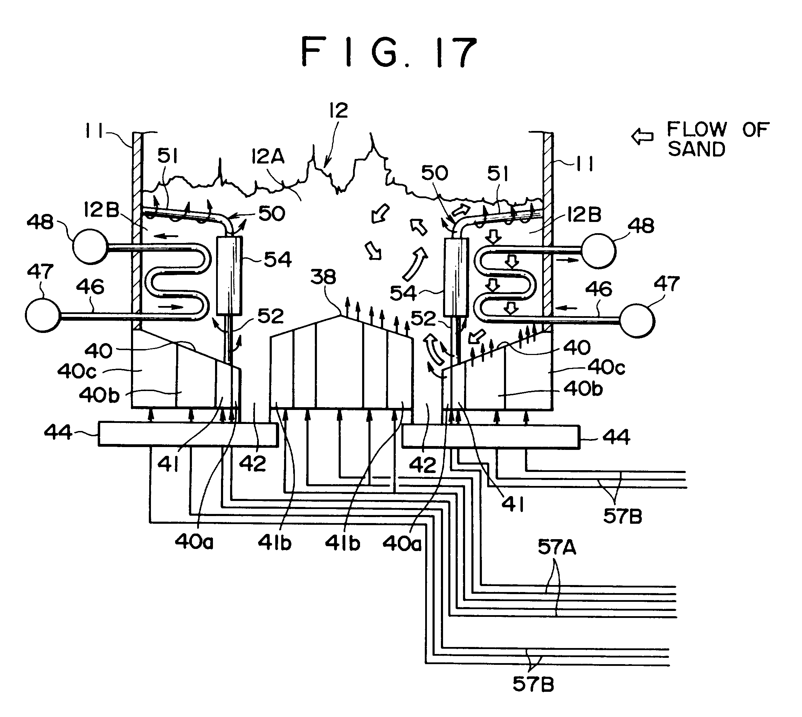

Next, equipment for supplying fluidized gases to each of the gas chambers, which comprises a feature of the apparatus, will be described with reference to Figs. 16 and 17.

First, a primary air blower (a gas jetting means) 60A which is a fluidized gas (here, air) supply source is connected to gas chambers 40a and 41b constituting a distributor for main combustion portion through a branch pipe 57A. Air discharged out of the primary air blower 60A is jetted from the fluidized gas jet toward a main combustion portion 12A in the furnace. The air plays a part as combustion air as well as a part as fluidizing air in the main combustion portion 12A.

On the other hand, a downstream portion of an exhaust fan 36 in the exhaust passage is connected to gas chambers 40b, 40c and a gas chamber 41 constituting the distributor for heat recovery portion through an exhaust gas recirculating pipe 58 and a branch pipe 57B. A damper (means for adjusting a recirculation amount) 59 and an exhaust gas recirculating blower 60B are provided halfway of the exhaust gas recirculating pipe 58. The exhaust gases having passed through a bag filter 34 are recirculated to the gas chambers 40b, 40c and 41 through the pipes 58 and 57B by the exhaust gas recirculating blower 60B, the recirculation amount capable of being adjusted by the damper 59.

The discharge side of the primary air blower 60A is connected to the exhaust gas recirculating blower 60B through a pipe 61 which is a connection passage, and a damper (closing means) 62 is provided halfway of the pipe 61.

Air discharged out of the primary air blower 60A is supplied as the fluidized gas to the gas chambers 41b and 40a constituting the distributor for main combustion, which gas is jetted from the fluidized gas jet to the main combustion portion 12A.

On the other hand, a part of the burned exhaust gases which flow through the exhaust passage is recirculated as the fluidized gas to the gas chambers 40b, 40c and the gas chamber 41 constituting the distributor for heat recovery portion, and is jetted from the fluidized gas jet into the heat recovery portion 12B. The concentration of oxygen in the burned exhaust gases recirculated as described is very low as compared with air. Therefore, even if' the supply amount of the fluidized gas (that is, the recirculation amount of the burned exhaust gas) is increased in order to fully effect fluidization, the concentration of oxygen in the heat recovery portion 12B rarely rises, and the combustion of fuel in the heat recovery portion 12B is hardly promoted. Accordingly, the thermal damage of the heat transfer pipes caused by the local higher temperature phenomenon and the generation of hydrogen chloride resulting from the promotion of combustion can be prevented, and the generation of NOx can be also prevented. Moreover, since sensible heat of the recirculated burned exhaust gases can be recovered through the heat transfer pipes 46, the heat recovery amount considerably increases as compared wi'th prior art, and also when the in-bed combustion rate is low, sufficient quantities of heat can be recovered.

In a period of time at which the flow rate of the burned exhaust gases is insufficient such as when the apparatus rises, the damper 62 may be opened. Thereby, a shortage of the supply amount of the fluidized gas to the gas chambers 40b, 40c and 41 can be made up by the discharge air of the primary air blower 60A.

### Experimental Data

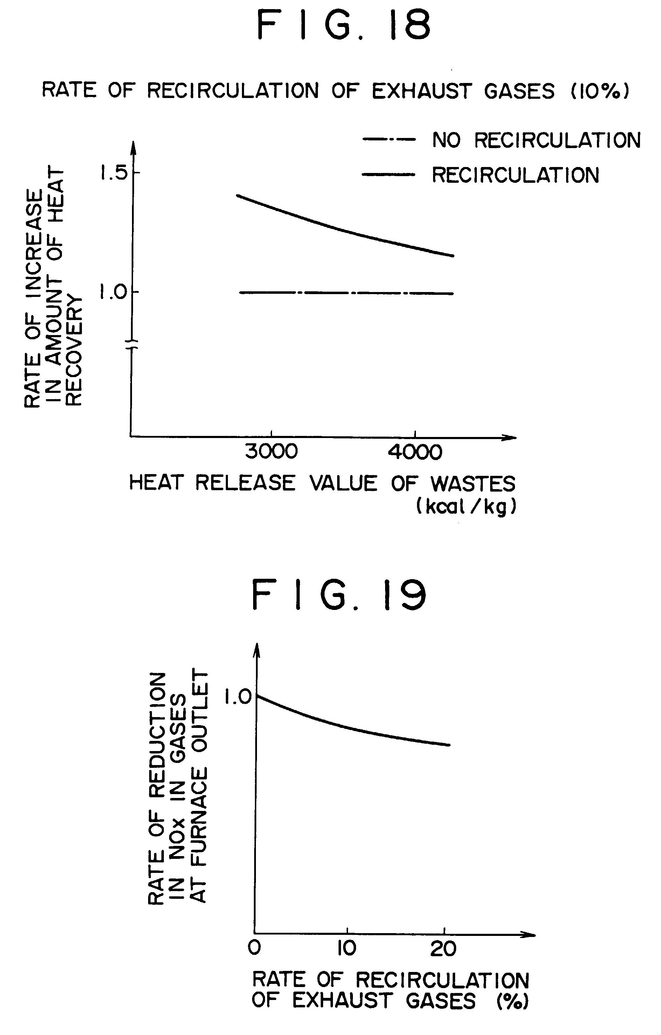

Fig. 18 is a graph showing a relationship between the rate (i.e., an increase rate in heat recovery amount) between the heat recovery amount in the case where no recirculation of exhaust gases is carried out (i.e., in the case where air is supplied to the heat recovery portion 12B as the fluidized gas) and the heat recovery amount in the case where 10% of all the burned exhaust gases is recirculated (i.e., in the case where the recirculation rate of exhaust gases is 10%), and the heat release value of wastes. As shown in this graph, when the heat release value of wastes is in the range of from 3000 to 4000 kcal/kg, the heat recovery amount can be increased approximately 1.2 to 1.4 times by the execution of the recirculation of exhaust gases.

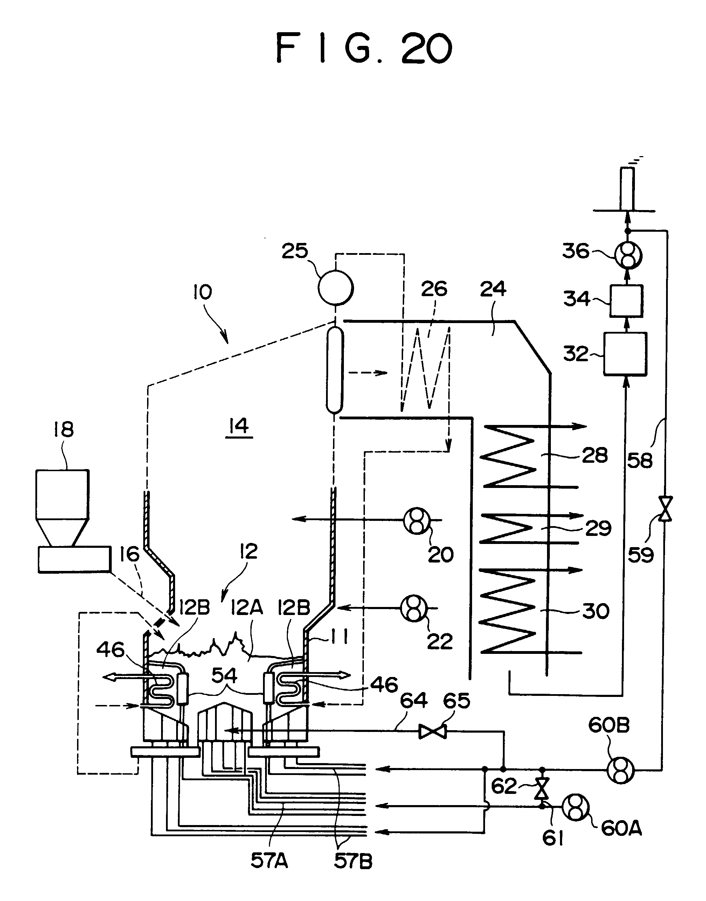

Fig. 19 is a graph showing a relationship between the recirculation rate of exhaust gases and the rate of reduction in NOx in burned exhaust gases at the furnace outlet (the amount of NOx generation when the amount of NOx generation is 1 in the case where the recirculation amount of exhaust gases is 0). In this experiment, the recirculation rate of exhaust gases is 10%. The content of the burned exhaust gases in the fluidized gases to the heat recovery portion 12B is 100%. In the case where the recirculation rate of exhaust gases is 10% or more, a part thereof is used for the fluidized gas for the main combustion portion.

As will be apparent from the graph, the generation of NOx can be suppressed to contribute to the improvement in environment by the execution of recirculation of exhaust gases.

Next, another embodiment in which the burned exhaust gases are recirculated to the distributor for heat recovery portion as the fluidized gases is shown in Fig. 20.

In this embodiment, a pipe 64 is branched from the exhaust gas recirculating pipe 58 and is connected to the gas chamber 41b constituting the distributor for main combustion portion. A damper 65 is provided halfway of the pipe 64, and a part of burned exhaust gases is also recirculated to the gas chamber 41b.

According to the above-described construction, the burned exhaust gases within the range capable of obtaining a sufficient combustion efficiency can be suitably mixed into air supplied from the primary air blower 60A to the gas chamber 41b to thereby suppress the NOx generation in the main combustion portion 12A.

In the present invention, a place where the recirculating burned exhaust gases are extracted from the exhaust passage may be suitably set. Xowever, if the burned exhaust gases are recirculated from the downstream of the bag filter 34 which is the exhaust gas processing device, this brings forth the advantage in that better burned exhaust gases than those from which harmful components are removed by the bag filter 34 can be supplied as the fluidized gases.

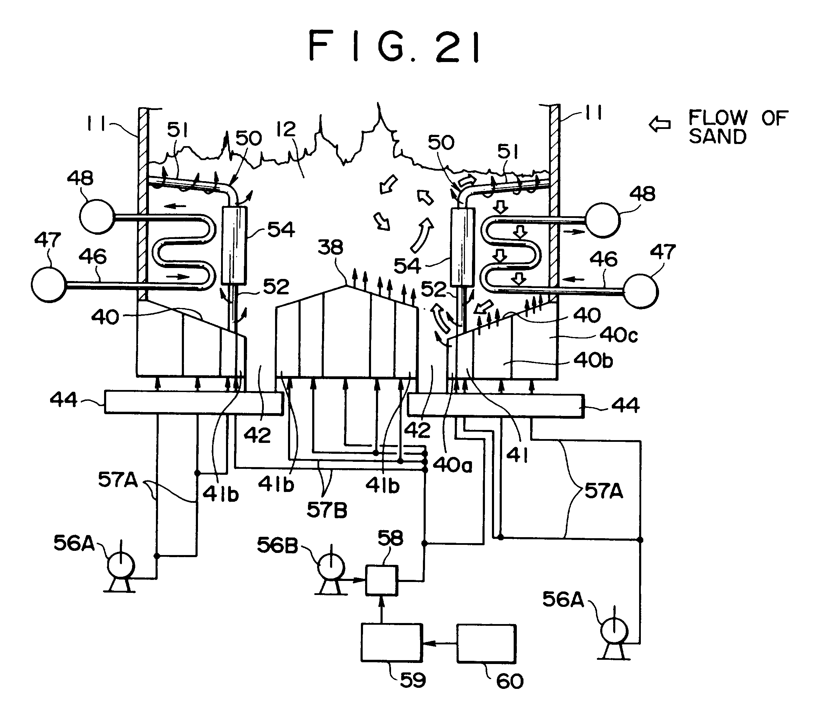

Next, another preferred embodiment improved over the first embodiment will be described with reference to Figs. 21 to 25.

Heat generated by the combustion of substances to be burned is transmitted to heat transfer pipes 46 through sand particles which flow through the furnace. In other words, out of heat generated by burning the substances to be burned, only the heat generated in the fluidized bed can be recovered by the heat transfer pipes 46.

The ratio (hereinafter referred to as the combustion rate) of the quantity of heat generated in the fluidized bed to the total quantity of heat is 50% at the most, and the remainder is escaped to atmosphere by the combustion at the free board above the fluidized bed. Particularly, where as the substances to be burned, wastes such as plastics which are easily gasified or wastes which is high in low heat release value per unit weight are charged, the combustion rate is materially low, and a considerably loss in heat recovery occurs accordingly.

In view of the foregoing, the present embodiment has its object to improve the heat recovery efficiency from the fluidized bed with a simple construction.

As the means for solving the aforementioned problem, the present embodiment provides a heat recovery apparatus by a fluidized bed in which a fluidized bed formed of fluidized particles which is flown by receiving fluidized gases jetted out of a distributor provided at the bottom of the apparatus body is formed on the distributor, and heat recovery means for recovering heat generated by burning substances to be burned at the fluidized bed is provided in the fluidized bed, wherein rich oxygen gases which are higher in concentration of oxygen gas than that in air are jetted as fluidized gases jetted out of at least a part of the distributor.

More specifically, a primary air blower (air supply means) 56A which is an air supply source is connected through a pipe 57A to a gas chamber 41 to which are connected gas chambers 40b, 40c located below the heat recovery portion and the pipe grid type distributor 52. The fluidized gases (air) discharged out of the primary air blower 56A are jetted from the fluidized gas jet of the second distributing plate 40 or the fluidized gas jet of the wall of pipe grid type distributor 52 toward the fluidized bed 12 in the furnace.

On the other hand, a primary air blower (air supply means) 56B similar to the above-described primary air blower 56A is connected through a pipe 57B and a mixer 58 to a gas chamber 40a in the vicinity of an incombustible discharge portion 42 rather than the gas chamber 41 and a gas chamber 41b below the first distributing plate 38. An oxygen generator (oxygen adding means) 60 formed from a PSA device or the like is connected to the mixer 58 through a buffer tank 59. High purity oxygen gas supplied to the oxygen generator 60 through the buffer tank 59 is added by the mixer 58 to air supplied from the primary air blower 56B, which is supplied as the rich oxygen gas to the gas chambers 40a and 41b. The rich oxygen gases supplied to the gas chamber 41 are jetted into the fluidized bed 12 from a number of fluidized gas jets provided in the wall of the pipe grid type distributor 52. The rich oxygen gases jetted out of the gas chamber 40a through the fluidized gas jets are horizontally jetted toward the incombustible discharge portion 42 and pass in the vicinity of the surface directed at the first distributing plate 38 in the baffle 54.

Further, a damper (not shown) for adjusting the amount of the fluidized gas which flows through pipes 57 is provided halfway of pipes 57A and 57B connected to the gas chambers. The jetting amount of the fluidized gas can be adjusted for each pipe 57 by the damper.

Here, the fluidized gas jetted to the main combustion portion through the gas chambers 41b and 40a is the rich oxygen gas in which the high purity oxygen gas is added to the gas discharged out of the primary air blower 56B. Therefore, the combustion within the main combustion portion of the fluidized bed is promoted as compared with the case where air is jetted as it is as in prior art to improve the combustion rate in the fluidized bed. The heat generated thereat is transmitted to the heat transfer pipes 46 in the heat recovery portion through the fluidized bed 12 to thereby improve the heat recovery efficiency through the heat transfer pipes 46.

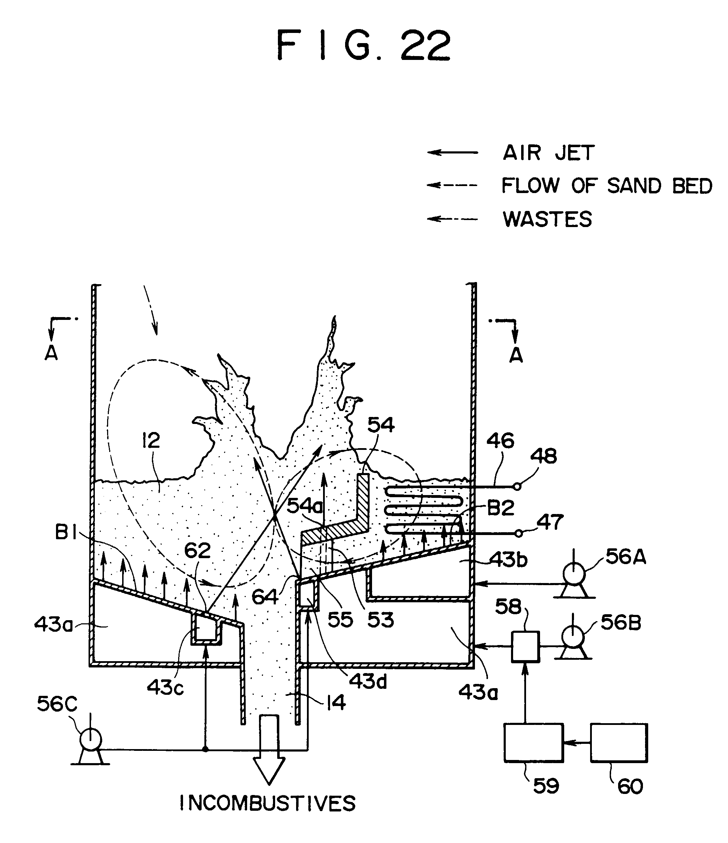

Another embodiment in which a part of the distributor jets rich oxygen gases will be described hereinafter with reference to Fig. 22.

In this embodiment, an incombustible discharge outlet 14 is provided in the central portion of the bottom of the apparatus, and a first distributing plate B1 and a second distributing plate B2 are disposed to left and right, respectively, thereof. On the second distributing plate 2, a division member 54 is stood upright at a position in the vicinity of the incombustible discharge outlet 14, by which division member 54 is divided the fluidized bed 12 into a main combustion portion on the left side in Fig. 22 and a heat recovery portion on the right side in Fig. 22. Stanchions 53 are intermittently disposed below the division member 54, and a fluidized bed communication passage 28 for communicating the main combustion portion with the heat recovery portion is formed between the stanchions 53.

The first distributing plate B1 and the second distributing plate B2 are inclined toward the incombustible discharge outlet 14, the entirety of which has a valley shape, and gas chambers 43a, 43b, 43c and 43d are disposed below both the distributing plates B1 and B2.

The gas chamber 43a is formed below both the distributing plates B1 and B2 and faces to an area below the division member 54 in the second distributing plate B2 and substantially the whole area of the first distributing plate B1. The gas chamber 43b is formed only below the external portion of the second distributing plate B2, that is, below the heat recovery portion where the heat transfer pipes 46 are provided. The gas chamber 43c is formed only below a portion positioned in the vicinity of the incombustible discharge outlet 14 in the first distributing plate B1, and the gas chamber 43d is formed only below a portion positioned in the vicinity of the incombustible discharge outlet 14 in the second distributing plate B2.

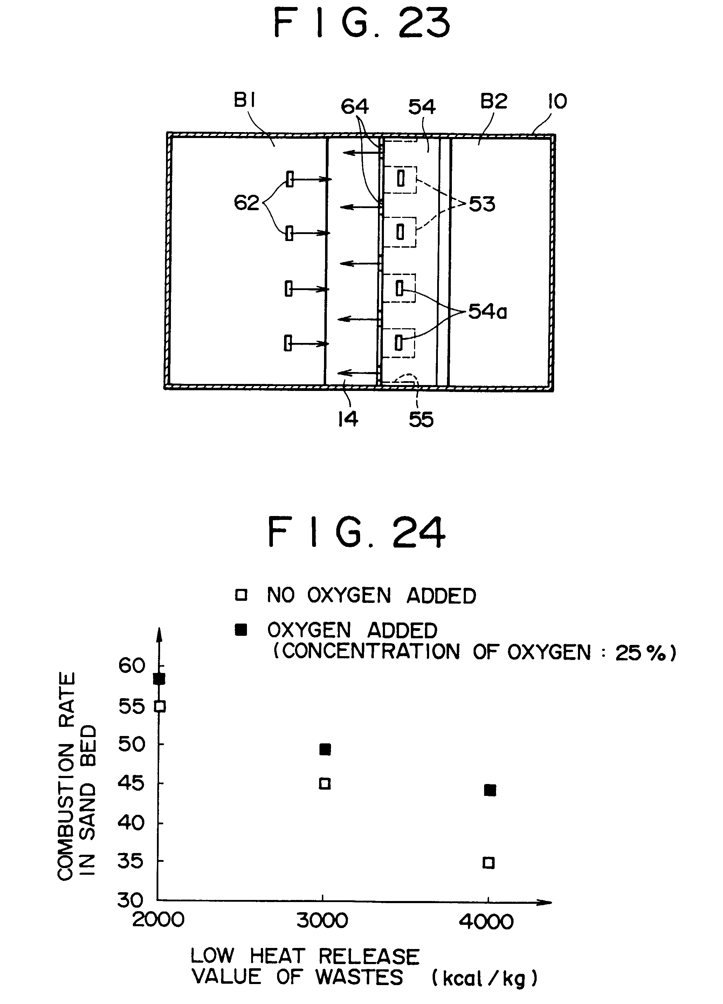

Both the distributing plates B1 and B2 are formed with gas jets for communicating the fluidized bed 12 thereabove with the gas chamber therebelow. However, for convenience's sake, Fig. 23 shows only gas jets 62 and 64 facing to the gas chambers 43c and 43d, respectively. As shown in Fig. 23, the arranging position of the first gas jet 62 is set to a position deviated in a direction perpendicular (a vertical direction in Fig. 23) to the line-up direction (a lateral direction in Fig. 23) of both the distributing plates B1 and B2 with respect to the arranging position of the second gas jet 64. Further, the division member 54 is also formed with a first fluidized gas jet 54a communicated with the gas chamber 43a.

A primary air blower 56A also shown in the previous embodiment is directly connected to the gas chamber 43b, and air discharged out of the primary air blower 56A is jetted upwardly from the first distributing plate B1 as the fluidized gas through the gas chamber 43a. Similarly, a high-speed primary air blower 56C is connected to the gas chambers 43c and 43d, and air discharged out of the high-speed primary air blower 56C is jetted out of the first distributing plate B1 as the first high-speed gas through the gas chamber 43c and is jetted out of the second distributing plate B2 as the second high-speed gas through the gas chamber 43d.

On the other hand, the primary air blower 56B also shown in the previous embodiment is connected to the gas chamber 43a through a mixer 58, and an oxygen generator (oxygen *adding* means) formed from a PSA device or the like is connected to the mixer 58 through a buffer tank 59. High purity oxygen gas supplied from the oxygen generator 60 to air supplied from the primary air blower 56B through the buffer tank 59 is added to the mixer 58 and is supplied to the gas chamber 43a as rich oxygen gas and jetted upward from the second distributing plate B2.

The jetting speed of the first high-speed gas and the second high-speed gas caused by the high-speed air blower 56C is set to be higher than that of other fluidized gases. Further, both the jets 62 and 64 are set in their direction such that the first high-speed gas is jetted obliquely upwardly of the second distributing plate B2 from the first distributing plate B1 and the second high-speed gas is jetted obliquely upwardly directed upwardly of the first distributing plate B1 (more specifically, upwardly of the division member 54 described later) from the second distributing plate B2. The shape and the arranging position of the division member 54 are set such that the division member 54 is deviated from the jetting direction of the high-speed gases from both the jets 62 and 64. In the illustration, the division member 54 is formed into a substantially L-shape in section.

Next, the operation of the apparatus will be described.

First, the substances to be burned charged from the upper inlet (not shown) fall on the fluidized bed 12 on the first distributing plate B1. This fluidized bed 12 comprises a moving bed which settles to the bottom in the form of a light foam bed by the jetting of the rich oxygen gases from the gas chamber 43a. Here, combustible substances in the substances to be burned are subjected to the primary combustion (rough combustion) whereas incombustibles settle to the bottom and are discharged out of the incombustible discharge outlet 14.

The fluidized bed 12 constitutes a main combustion portion. Since rich oxygen gas which is higher in concentration of oxygen gas than that of air is jetted into the main combustion portion from the first distributing plate B1, the combustion of the substances to be burned is promoted accordingly to improve the combustion rate at the fluidized bed 12.

The incombustible substances (mainly carbon) settles to the bottom of the fluidized bed 12 and gradually move toward the incombustible discharge outlet 14 along the inclination thereof but are blown up together with the fluidized particles upwardly while avoiding the division member 54 by the first high-speed gases jetted out of the gas jet 62 located this side of the outlet 14. The incombustible substances then fall on the fluidized bed on the side of the heat recovery portion (on the right side in Figs. 4 and 5) beyond the division member 54, and the burned heat generated in the main combustion portion is transmitted to the heat recovery portion through the fluidized bed 12. The fluidized bed 12 in the heat recovery portion also comprises a moving bed which settles to the bottom in the form of a light foam, but only the normal air is jetted in the heat recovery portion so that the combustion is slow accordingly and the carbon is slowly and completely burned.

The substances to be burned which are changed into ashes by the combustion are moved together with the fluidized particles toward the incombustible discharge outlet 14 passing through the fluidized bed communication passage 28 below the division member 54 but are blown up to the free board (the space above the fluidized bed) by the second high-speed gases jetted obliquely upwardly on this side of the outlet 14 and are discharged together with the exhaust gases from discharge outlet at the top of the furnace. The high-temperature fluidized particles blown up together with the ashes are thereafter fallen and returned to the main combustion portion. Thereafter, the circulation in substantially 8-shape is repeated (see arrow indicated by broken lines in Fig. 1). This circulation promotes the equalization of the entirety.

Water flowing into the heat transfer pipe 46 is changed into saturated vapor or overheated vapor by the heat-exchange with the exhaust gases and guided outside the apparatus. Thereby, heat in the heat recovery portion is recovered.

### Experimental Data

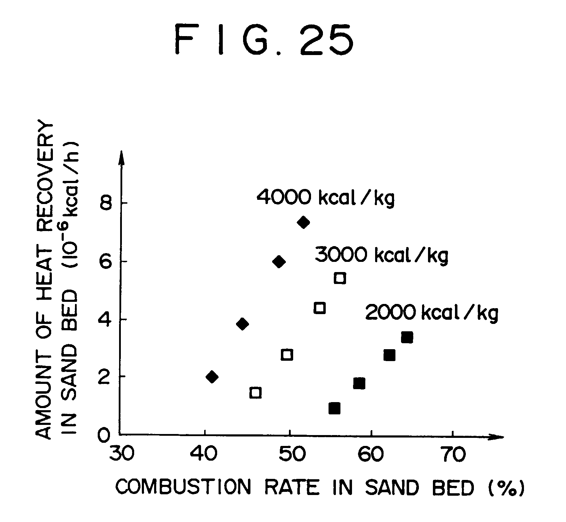

Fig. 24 shows the results of measurement of the combustion rate within the sand bed (fluidized bed) with respect to the case where air is jetted from the gas chamber 43b to the heat recovery portion and the case where air is jetted after oxygen has been added thereto (final concentration of oxygen gas is about 25%), in the apparatus in the form of another embodiment. The combustion rate in sand bed is expressed by (Heat quantity g'enerated by combustion in sand bed)/{(Heat quantity generated by combustion in sand bed) + (Heat quantity generated by combustion outside sand bed)}. Fig. 25 shows the results of measurement of a relationship between the combustion rate in sand bed and the heat recovery amount at the sand bed portion.

It is understood from Fig. 24 that high purity oxygen gas is added in advance to gas to be jetted to the main combustion portion whereby the combustion rate in sand bed increases, and particularly, when the low heat release value of wastes is high, the effect thereof is materially high. It is further understood from Fig. 25 that the higher the combustion rate in the sand bed, the heat recovery amount at the sand bed portion also increases. Thus, it is concluded that the heat recovery amount at the sand bed can be increased by the addition of the oxygen gas, whereby the heat recovery rate can be considerably enhanced.

The present invention is not limited to the above-described modes of embodiments but the following modes may be illustrated as follows.
(1) The concentration of oxygen gas in the rich oxygen gas may be suitably set in the range higher than the concentration of oxygen gas (about 21%) in air. It has been found by experiments that when the concentration of oxygen gas exceeds 30%, the combustion within the fluidized bed 12 is excessively promoted and the refractories constituting the heat insulating wall '11 or the division member 54 are easily damaged by that heat. It is therefore preferable to set the concentration of the oxygen gas to a value less than 30%. Such a setting of the concentration of the oxygen gas can be freely carried out by the adjustment of the flow rate of the oxygen gas to the mixer, for example, in the case of the above-described first embodiment.
(2) Further, the rich oxygen gases may be jetted over the entire area of the apparatus. Even if the rich oxygen. gas is jetted in the heat recovery portion instead of the main combustion portion, the cost can be reduced by stopping the addition of oxygen gas to the heat recovery portion since a degree contributing to the promotion of combustion is low.
(3) In the present invention, components except an oxygen component out of fluidized gases'are particularly out of question. For example, there may be employed one in which a suitable amount of oxygen gas is mixed into an inert gas such as argon. As shown in the above-described embodiments, air is jetted to the heat recovery portion, and gas in which a small amount of oxygen gas is added to air is jetted to at least a part of the main combustion portion, thus bringing forth the advantage that the above-described excellent effects can be obtained by an inexpensive construction which fully makes use of inexhaustible air.

The present invention can be carried out in various other forms without departing from its spirit or major features. Therefore, the aforementioned embodiments are mere illustrations in every aspect and should not be construed in a limited manner. The scope of the present invention is as defined in claims and is not restricted in any way by the text of the specification. Further, modifications and changes belonging to equal scopes in claims are all within the scope of the present invention.

An apparatus having a small construction, which can realize formation of good fluidized bed and good heat recovery, and can stabilize the heat recovery amount and control the same. A first distributing plate (38) and a second distributing plate (40) are provided on the furnace bottom, an incombustible discharge portion (42) is provided between both the distributing plates (38) and (40), and a fluidized bed (12) is formed above the distributing plates (38) and (40). A heat recovering heat transfer pipe (46) and a baffle (54) are provided above the second distributing plate (40), and a plurality of pipe grid type distribotors (50) having a number of fluidized gas jets are juxtaposed above the heat transfer pipes (46). There is formed a reflux such that fluidized particles of the fluidized bed (12) are moved up in the vicinity of the baffle (54) by jetting the fluidized gases from the distributing plates (38) and (40), move down passing through a clearance between the pipe grid type distribotors (50) an a clearance between the heat transfer pipes (46) and return to and above the first distributing plate (38) from the below of the baffle (54).

## Claims

1. A heat recovery apparatus by a fluidized bed having an air distributor on the bottom of the apparatus body, said air distributor having a fluidized bed comprising fluidizing particles and a heat transfer pipe into which flows a medium for recovering heat generated by burning substances to be burned in said fluidized bed provided thereon characterized in that said heat transfer pipe is disposed at a position adjacent to a side wall of said apparatus body, a baffle is provided at a position away from the side wall of said apparatus body and at a position upwardly away from said air distributor, a plurality of pipe grid type gas distributors having a number of fluidized gas emitting ports provided in the pipe wall are substantially horizontally juxtaposed upwardly of said heat transfer pipe, and the fluidizing gases are emitted from said air distributor to thereby form in the fluidized bed a reflux in which said fluidizing particles move up along the neighborhood of the surface opposite to the surface opposed to said heat transfer pipe in said baffle, and move down passing through between said pipe grid type gas distributors and a location where said heat transfer pipe is disposed to creep under said baffle.

2. The heat recovery apparatus by a fluidized bed according to claim 1, characterized in that said distributor is constructed so that the jetting amount of the fluidized gas in the vicinity immediately below said baffle is larger than that of the fluidized gas in other places.

3. The heat recovery apparatus by a fluidized bed according to claim 1 or 2, characterized in that said apparatus comprises fluidization adjusting means for adjusting the jetting amount of the fluidized gas which jets out of a position substantially below said baffle.

4. The heat recovery apparatus by a fluidized bed according to any of claims 1 to 3, characterized in that the pipe grid type distributors above said heat transfer pipes are inclined in a direction to be lowered as they part from the wall of said apparatus body.

5. The heat recovery Apparatus by a fluidized bed according to any of claims 1 to 4, characterized in that a clearance between said pipe grid type distributors is set to be smaller than that between said heat transfer pipes.

6. The heat recovery apparatus by a fluidized bed according to any of claims 1 to 5, characterized in that a clearance between said pipe grid type distributors is set to be smaller than that between said baffle and said distributor.

7. The heat recovery apparatus by a fluidized bed according to any of claims 1 to 6, characterized in that said pipe grid type distributors are extended substantially in a vertical direction sideward of said heat transfer pipes to said distributor, and said baffle is provided in the periphery of each of said pipe grid type distributors sideward of said heat transfer pipes.

8. The heat recovery apparatus by a fluidized bed according to any of claims 1 to 7, characterized in that said distributor comprises distributing plates constituting the bottom of the apparatus body and having a number of gas jets, and gas jetting means for jetting gases into the apparatus body from the gas jets of said distributing plates, and an incombustible discharge portion is provided at the bottom of the apparatus bottom, said distributing plates being inclined in a direction to be lowered as they face to said incombustible discharge portion.

9. The heat recovery apparatus by a fluidized bed according to claim 8, characterized in that said incombustible discharge portion is provided at a position substantially below said baffle, and both the distributing plates with said incombustible discharge portion sandwiched therebetween are inclined in directions reversed to each other.

10. The heat recovery apparatus by a fluidized bed according to claim 7, characterized in that said pipe grid type distributor is provided so that said pipe grid type distributor extends through the furnace wall above said heat transfer pipe, and thus extended-through pipe grid type distributor is connected to the secondary air supply pipe whereby a part of air supplied to the pipe grid type distributor is re-supplied into the furnace as the secondary air.

11. The heat recovery apparatus by a fluidized bed according to claim 1, characterized in that the fluidized bed formed from fluidized particles at the bottom of the apparatus body is divided by the baffle into a main combustion portion and a heat recovery portion; said main combustion portion is provided with a distributor for main combustion portion for jetting fluidized gases for fluidizing the fluidized particles in said main combustion portion and said heat recovery portion is provided with a distributor for heat recovery portion for jetting the fluidized gases for fluidizing the fluidized particles in said heat recovery portion; further comprising exhaust gas recirculation means for recirculating burned exhaust gases generated by combustion in said fluidized bed to said distributor for heat recovery portion as the fluidized gases.

12. The heat recovery apparatus by a fluidized bed according to claim 10, characterized in that an exhaust gas processing device for removing a specific component in the burned exhaust gases is provided in an exhaust passage for said burned exhaust gases, said exhaust gas recirculation means being constructed so that the burned exhaust gases having passed through said exhaust gas processing device are recirculated to said distributor for heat recovery portion.

13. In the heat recovery apparatus by a fluidized bed according to any of claims 10 to 11, characterized in that a supply device for fluidized gases in said apparatus comprising a connection passage for connecting a supply source for fluidized gases to said distributor for main combustion portion to said distributor for heat recovery portion, and means for closing said connection passage.

14. The heat recovery apparatus by a fluidized bed according to any of claims 10 to 12, characterized in that said exhaust gas recirculation means is constructed so that a part of said burned exhaust gases is recirculated also to said distributor for main combustion portion as the fluidized gas.

15. The heat recovery apparatus by a fluidized bed according to claim 1, characterized in that the fluidized bed formed from fluidized particles at the bottom of the apparatus body is divided by the baffle into a main combustion portion and a heat recovery portion, and said apparatus comprises a first jetting means for jetting rich oxygen gases whose oxygen gas concentration is higher than that in air as said fluidized gases from said distributor to at least a part of said main combustion portion, and a second jetting means for jetting gases whose oxygen concentration is lower than that in air as said fluidized gases from said distributor to said heat recovery portion.

16. The heat recovery apparatus by a fluidized bed according to claim 14, characterized in that said first jetting means comprises air supply means for supplying air to a gas jetting portion of said distributor and oxygen adding means for adding oxygen gas to said air before said air is jetted from the gas jetting portion, and said second jetting means comprises air supply means for supplying air to the gas jetting portion of said distributor.
